# EUROPEAN PATENT APPLICATION

(11) **EP 4 362 178 A1**
(43) Date of publication of application: **01.05.2024**
(21) Application number: 23204740.7
(22) Date of filing: 19.10.2023
(51) Int. Cl.: H01M 50/107, H01M 50/342

(54) **CYLINDRICAL SECONDARY BATTERY**

(30) Priority: 27.10.2022 KR 20220140275
(71) Applicant: Samsung SDI Co., Ltd., Yongin-si, Gyeonggi-do 17084 (KR)
(72) Inventor: LEE, Sang Hyo, 17084 Yongin-si (KR)
(74) Representative: Marks & Clerk LLP

(57) **Abstract**

A cylindrical secondary battery is provided which can be sequentially opened at different rupture pressures, by including two vents ruptured by the different rupture pressures, thereby improving safety. The cylindrical secondary battery includes an electrode assembly having a first electrode plate, a separator, and a second electrode plate; a case accommodating the electrode assembly and including an opening at an upper end and electrically connected to the second electrode plate; a terminal penetrating a lower surface of the case and electrically connected to the first electrode plate; and a cap plate sealing an upper end of the case. The cap plate includes: a first vent portion at the center of a central region and has a smaller thickness than other regions; and a second vent portion at an edge region outside the central region and has a smaller thickness than other regions and a larger thickness than the first vent portion.

## Description

### BACKGROUND

### 1. Field

Various embodiments of the present disclosure relate to a cylindrical secondary battery.

### 2. Description of the Related Art

In general, a cylindrical secondary battery includes a cylindrical electrode assembly, a cylindrical can accommodating the electrode assembly and an electrolyte, and a cap assembly coupled to an upper-end opening of the can to seal the can. The cap assembly is electrically connected to the electrode assembly and is the means for electrically connecting the electrode assembly and an external structure.

A cylindrical secondary battery generally has a structure in which a can having a negative polarity and a cap assembly having a positive polarity are insulated from each other by means of a gasket. In the case of a battery module in which a plurality of connected cylindrical secondary batteries are connected to one another, bus bars must be connected to upper and lower portions of the secondary batteries, respectively. However, this structure is complicated and the manufacturing process time is prolonged.

The above information disclosed in this Background section is only for enhancement of understanding of the background of the invention and therefore it may contain information that does not constitute prior art.

### SUMMARY

The present disclosure provides a cylindrical secondary battery which can be sequentially opened at different rupture pressures, by including two vents ruptured by the different rupture pressures, thereby improving safety.

A cylindrical secondary battery according to embodiments of the present disclosure includes: an electrode assembly having a first electrode plate, a separator, and a second electrode plate; a case accommodating the electrode assembly and including an opening at an upper end and being electrically connected to the second electrode plate; a terminal penetrating a lower surface of the case and being electrically connected to the first electrode plate; and a cap plate sealing an upper end of the case. The cap plate includes: a first vent portion located at the center of a central region and has a smaller thickness than other regions; and a second vent portion located at an edge region that is outside the central region and has a smaller thickness than other regions and a larger thickness than the first vent portion.

The thickness of the cap plate at the first vent portion may be approximately 1/10 to approximately 1/7 the thickness of the cap plate outside the first vent portion.

The cap plate at the first vent portion may have a uniform (or substantially uniform) thickness and may be in a range from approximately 0.08 mm to approximately 0.14 mm.

The diameter of the first vent portion may be in a range from approximately 2 mm to approximately 5 mm.

The first vent portion may be a flat thin plate.

The first vent portion may be a cap that is concave downward.

The first vent portion may have a circular, quadrangular or polygonal shape on a plane of the cap plate.

The second vent portion may be a planar ring that is symmetric with respect to the central region.

The cap plate may include a step between the central region and the edge region.

The cap plate may include an inclined connection region that connects the central region and the edge region.

The cap plate at the second vent portion may have a thickness in a range from approximately 0.15 mm to approximately 0.2 mm.

The case may include a beading part that is recessed into the case and a crimping part above the beading part. The cap plate may be fixed between the beading part and the crimping part, and the crimping part may include the upper end of the case bent inward toward the cap plate.

The cylindrical secondary battery may include a gasket between the cap plate and the beading part and between the cap plate and the crimping part, and the cap plate may be non-polar (e.g. electrically insulated from the case).

A first rupture pressure of the first vent portion may be smaller than a second rupture pressure of the second vent portion.

The first rupture pressure may be in a range from approximately 7 to approximately 10 kgf/cm², and the second rupture pressure may be in a range from approximately 25 to approximately 50 kgf/cm².

In addition, a cylindrical secondary battery according to embodiments of the present disclosure includes: an electrode assembly having a first electrode plate, a separator, and a second electrode plate; a case accommodating the electrode assembly and including an opening at an upper end thereof and being electrically connected to the second electrode plate; a terminal penetrating a lower surface of the case and being electrically connected to the first electrode plate; a cap plate sealing an upper end of the case. The cap plate includes a first vent portion and a second vent portion which are configured to rupture at different rupture pressures, and the first vent portion may be a thin film having a uniform (or substantially uniform) thickness.

At least some of the above and other features of the invention are set out in the claims.

### BRIEF DESCRIPTION OF DRAWINGS

FIG. 1 is a perspective view illustrating a cylindrical secondary battery according to various embodiments of the present disclosure.
FIG. 2 is a cross-sectional view of the cylindrical secondary battery shown in FIG. 1.
FIG. 3 is an enlarged partial cross-sectional view illustrating an example of a cap plate of the cylindrical secondary battery shown in FIG. 2.
FIGS. 4A and 4B are enlarged partial cross-sectional views sequentially illustrating the operation of a cap plate shown in FIG. 3.
FIG. 5 is an enlarged partial cross-sectional view illustrating another cap plate of the cylindrical secondary battery shown in FIG. 2.

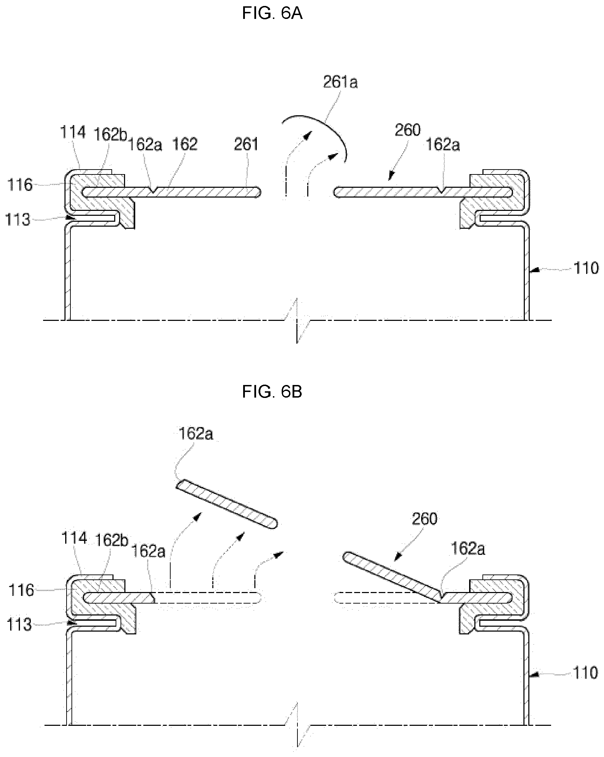

FIGS. 6A and 6B are enlarged partial cross-sectional views sequentially illustrating the operation of the cap plate shown in FIG. 5.

### DETAILED DESCRIPTION

Hereinafter, preferred embodiments of the present disclosure will be described in detail with reference to the accompanying drawings.

Examples of the present disclosure are provided to more completely explain the present disclosure to those skilled in the art, and the following examples may be modified in various other forms. The present disclosure, however, may be embodied in many different forms and should not be construed as being limited to the example embodiments set forth herein. Rather, these example embodiments are provided so that this disclosure will be thorough and complete and will convey the aspects and features of the present disclosure to those skilled in the art.

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the example term "below" can encompass both an orientation of above and below.

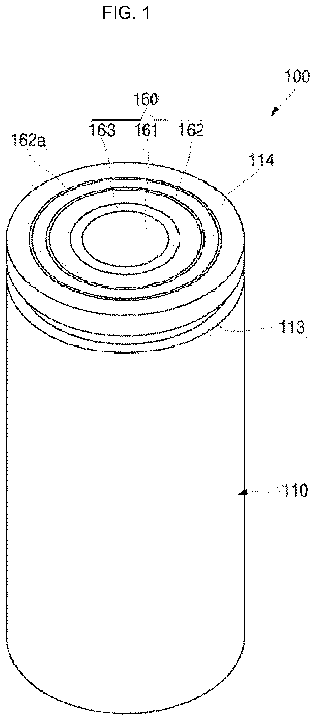

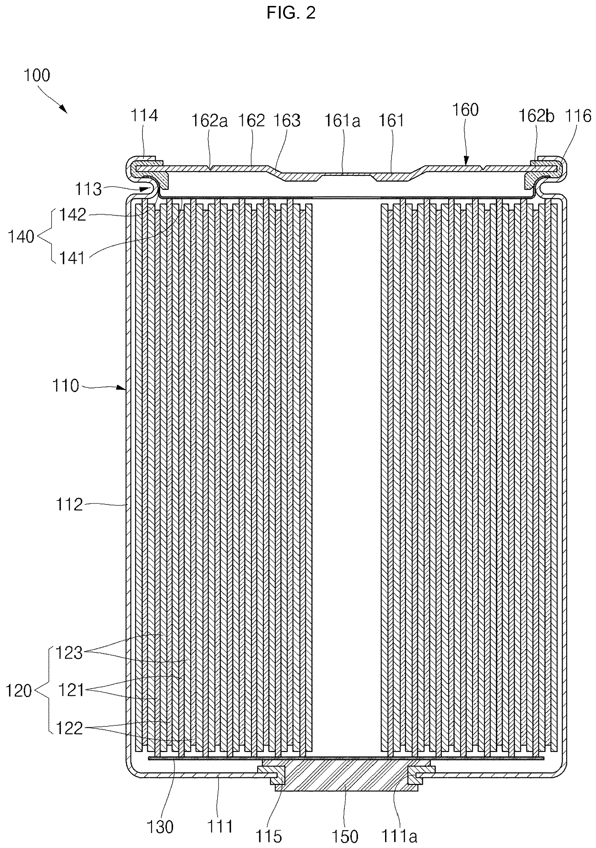

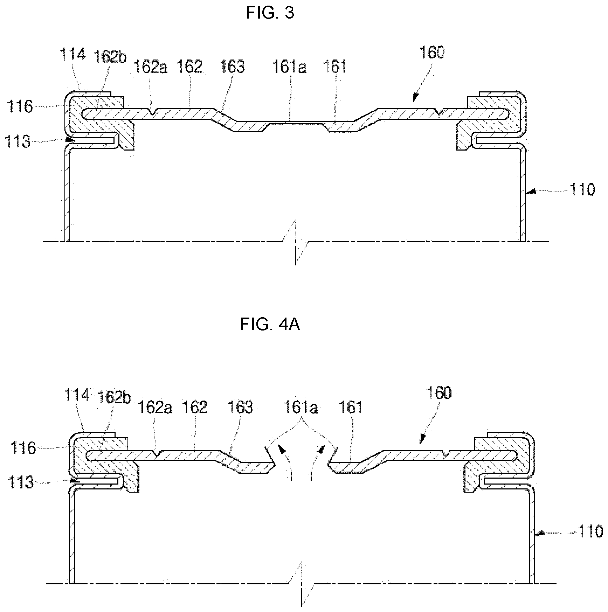

FIG. 1 is a perspective view illustrating a cylindrical secondary battery according to various embodiments of the present disclosure, FIG. 2 is a cross-sectional view of the cylindrical secondary battery shown in FIG. 1, and FIG. 3 is an enlarged partial cross-sectional view illustrating an example of a cap plate of the cylindrical secondary battery shown in FIG. 2.

As shown in FIGS. 1 to 3, the cylindrical secondary battery 100 according to one or more embodiments of the present disclosure may include a case 110, an electrode assembly 120 accommodated inside the case 110, a terminal 150 coupled to a terminal hole provided at one end of the case 110, and a cap plate 160 that seals an opening at the other end of the case 110.

The case 110 includes a circular lower side portion 111 and a lateral side portion 112 extending a predetermined length upward from an edge of the lower side portion 111. The lower side portion 111 and the lateral side portion 112 of the case 110 may be integrally formed.

The circular lower side portion 111 may be shaped of a flat circular plate and may include a terminal hole 111a penetrating a central portion. The terminal 150 may be inserted into the terminal hole 111a. A first gasket 115 for sealing and electrical insulation may be interposed between the terminal hole 111a and the terminal 150. The first gasket 115 may electrically separate the terminal 150 and the case 110 from each other by preventing the terminal 150 and the case 110 from contacting each other. The terminal hole 111a of the lower side portion 111 of the case 110 may be sealed by the first gasket 115. The first gasket 115 may be made of a resin material such as polyethylene (PE), polypropylene (PP), or polyethylene terephthalate (PET).

During the manufacture of the cylindrical secondary battery 100, an upper end of the case 110 may be open. Therefore, during the manufacture of the cylindrical secondary battery 100, the electrode assembly 120 may be inserted through the open upper end of the case 110 together with an electrolyte. After the electrolyte and the electrode assembly 120 are inserted into the case 110, the cap plate 160 may be coupled to the open upper end to seal the electrode assembly 120 and the electrolyte inside of the case 110. The electrolyte serves to enable movement of lithium ions between a positive electrode plate 121 and a negative electrode plate 122 constituting the electrode assembly 120. The electrolyte may be a non-aqueous organic electrolyte that is a mixture of lithium salt and a high-purity organic solvent. In addition, the electrolyte may be a polymer using a polymer electrolyte or a solid electrolyte, but the type or kind of electrolyte is not limited herein.

The case 110 may be made of steel, a steel alloy, aluminium, an aluminium alloy, or an equivalent thereof, but the material is not limited thereto. In addition, the case 110 may have, in order to prevent the electrode assembly 120 from escaping to the outside, an inwardly recessed beading part 113 formed below the cap plate 160 and an inwardly bent crimping part 114 formed above the cap plate 160.

In the case 110, after the electrode assembly 120 is inserted through the open upper end, the beading part 113 may be formed to prevent the electrode assembly 120 from being separated from the case 110.

The electrode assembly 120 includes the first electrode plate 121, the second electrode plate 122, and a separator 123. In one or more embodiments, the first electrode plate 121 may be a positive electrode plate, and the second electrode plate 122 may be a negative electrode plate. In one or more embodiments, the first electrode plate 121 may be a negative electrode plate, and the second electrode plate 122 may be a positive electrode plate. Hereinafter, for convenience of description, a case in which the first electrode plate 121 is a positive electrode plate and the second electrode plate 122 is a negative electrode plate will be described.

The first electrode plate 121 may have a positive electrode active material made of a transition metal oxide coated on at least one surface of a plate-shaped metal foil made of aluminium (Al). In addition, the first electrode plate 121 may have a positive electrode uncoated portion not coated with a positive electrode active material at a lower end. The positive electrode uncoated portion may protrude downward from the electrode assembly 120. That is, in the first electrode plate 121, the positive electrode uncoated portion may protrude further downward than the second electrode plate 122 and the separator 123.

The second electrode plate 122 may have a negative electrode active material made of graphite or carbon coated on at least one surface of a plate-shaped metal foil made of copper (Cu) or nickel (Ni). In addition, the second electrode plate 122 may have a negative electrode uncoated portion not coated with a negative electrode active material at an upper end. Such a negative electrode uncoated portion may protrude upward from the electrode assembly 120. That is, in the second electrode plate 122, the negative electrode uncoated portion may protrude further upward than the first electrode plate 121 and the separator 123.

The separator 123 may be polyethylene (PE) or polypropylene (PP), but is not limited thereto in the present disclosure. The separator may prevent an electrical short between the first electrode plate 121 and the second electrode plate 122 and allow only the movement of lithium ions therebetween.

After the electrode assembly 120 is stacked with the first electrode plate 121, the second electrode plate 122, and the separator 123, the electrode assembly 120 is wound from the winding end to have a substantially cylindrical shape. In addition, in the electrode assembly 120, the positive electrode uncoated portion, which is not coated with the positive electrode active material, protrudes downward from the first electrode plate 121, and the negative electrode uncoated portion, which is not coated with the negative electrode active material, protrudes upward from the second electrode plate 122 (e.g., the positive electrode uncoated portion and the negative electrode uncoated portion protrude in opposite directions).

A first current collector plate 130 may be a circular metal plate shaped to correspond to the lower surface of the electrode assembly 120. The planar size of the first current collector plate 130 may be equal to or smaller than the size of an upper surface of the electrode assembly 120. The first current collector plate 130 may be made of aluminium (Al). The first current collector plate 130 may be fixed and electrically connected to the first electrode plate 121 exposed on the lower side of the electrode assembly 120 by welding in a configuration in which an upper surface of the first collector plate 130 is in contact with the lower surface of the electrode assembly 120. The first current collector plate 130 may be fixed and electrically connected to the terminal 150 by welding in a configuration in which the lower surface thereof is in contact with an upper surface of the terminal 150. The first current collector plate 130 serves as a passage for current flow between the first electrode plate 121 of the electrode assembly 120 and the terminal 150. The first current collector plate 130 may be welded to the electrode assembly 120, stored in the case 110, and then welded to the terminal 150. The first current collector plate 130 may have a thickness in a range of approximately 0.2 mm to approximately 1.5 mm.

A second current collector plate 140 may include a circular planar portion 141 corresponding to the upper surface of the electrode assembly 120 and an extension portion 142 extending upward from an edge (e.g., a peripheral edge) of the planar portion 141. A lower surface of the planar portion 141 may be in contact with the upper surface of the electrode assembly 120. The lower surface of the planar portion 141 may be fixed and electrically connected to the second electrode plate 122 exposed to the upper portion of the electrode assembly 120 by welding in a configuration in which the lower surface of the planar portion 141 is in contact with the upper surface of the electrode assembly 120.

The extension portion 142 may extend upward from an edge (e.g., a peripheral edge) of the planar portion 141. The extension portion 142 may be in contact with and be coupled to the beading part 113 of the case 110. For example, the extension portion 142 may be coupled by welding in a configuration in which the extension portion 142 is in contact with the inner surface of the beading part 113 of the case 110. In addition, the extension portion 142 may include a plurality of extension portions so as to be spaced apart from each other along the edge of the planar portion 141. The second current collector plate 140 may be a passage for current flow between the second electrode plate 122 of the electrode assembly 120 and the case 110. Accordingly, the case 110 may be a negative electrode terminal.

The terminal 150 may be inserted into the terminal hole 111a provided in the lower side portion 111 of the case 110 and electrically connected to the first current collector plate 130. Accordingly, the terminal 150 may be a positive electrode terminal. The terminal 150 and the case 110 may have different polarities. The terminal 150 may be made of the same or similar material as the first current collector plate 130 and the first electrode plate 121. In the terminal 150, the diameter of the portion exposed on the outside of the lower portion of the case 110 and the diameter of the portion located inside the case 110 may be larger than the diameter thereof located in the terminal hole 111a.

The terminal 150 may include a head 151 at a portion exposed to the lower portion of the case 110 and a fastening part 152 located inside the case 110 and facing the electrode assembly 120. The terminal 150 may be coupled to the inside of the terminal hole 111a of the case 110 from the outside. The head 151 may be located outside the case 110. In addition, the fastening part 152 may be compression-deformed (compression-molded) by riveting, and compressed to the upper portion of the lower side portion 111 in a configuration in which the first gasket 115 is interposed therebetween. The fastening part 152 may have a diameter gradually increasing from the terminal hole 111a toward the inside of the case 110. In addition, the head 151 may be in close contact with the lower portion of the lower side portion 111 in a configuration in which the first gasket 115 is interposed therebetween. The first gasket 115 may be interposed between the terminal 150 and the terminal hole 111a to electrically insulate the terminal 150 and the case 110 from each other and to form a seal between the terminal hole 111a and the terminal 150. The terminal 150 may be electrically connected to the first electrode plate 121 of the electrode assembly through the first current collector plate 130.

The cap plate 160 is a circular metal plate and may be coupled to the upper end of the case 110. An upper surface of the cap plate 160 may be exposed to the outside. The cap plate 160 may be coupled to the upper end of the case 110 in a configuration in which a second gasket 116 is interposed therebetween, thereby preventing the cap plate 160 from being electrically connected to the case 110 (e.g., the second gasket 116 electrically insulates the cap plate 160 from the case 110). Since the cap plate 160 is not electrically connected to the positive electrode or the negative electrode of the electrode assembly 120, there may be no separate electrical polarity. The cap plate 160 may be made of aluminium, an aluminium alloy, or an equivalent thereof. The cap plate 160 is a metal plate and may have a thickness of 0.7 mm to 1.2 mm.

The cap plate 160 may be fixed in a configuration in which the edge portion 162 thereof is positioned between the beading part 113 and the crimping part 114 of the case 110. In one or more embodiments, the second gasket 116 may be on the beading part 113 of the case 110 and the cap plate 160 may be seated on the second gasket 116. Thereafter, the crimping part 114 of the case 110 may be bent toward the inside of the cap plate 160 to press the second gasket 116, thereby coupling the cap plate 160 and the case 110 to each other. The second gasket 116 may be made of a resin material such as polyethylene (PE), polypropylene (PP), or polyethylene terephthalate (PET). The second gasket 116 may press and seal a region between the case 110 and the cap plate 160 and may prevent the cap plate 160 from being separated from the case 110.

The cap plate 160 may include a central region 161 and an edge region 162 extending outwardly from the central region 161 and having an end portion 162b interposed between the beading part 113 and the crimping part 114 of the case 110 such that the cap plate 160 is be coupled to the case 110. Compared to the edge region 162, the central region 161 may be concavely formed toward the inside of the case 110. That is, the edge region 162 of the cap plate 160 may be located higher than the central region 161 such that there is a step between the central region 161 and the edge region 162 of the cap plate 160. The cap plate 160 may further include a connection region 163 connecting the central region 161 and the edge region 162. The connection region 163 may be inclined.

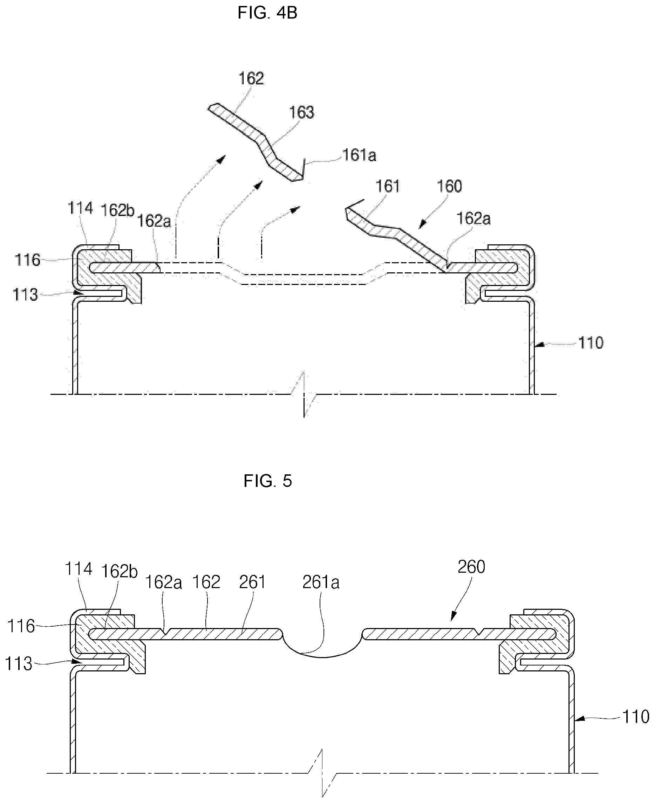

In order to allow the cap plate 160 to be opened at a first rupture pressure, a first vent portion 161a is provided at the center of the central region 161. The first rupture pressure may be a pressure at which the first vent portion 161a is ruptured when the internal pressure of the case 160 reaches a set pressure. In addition, the first rupture pressure may be in a range from approximately 7 to approximately 10 kgf/cm². In addition, the cap plate 160 includes a second vent portion 162a provided at an edge region 162. FIG. 4A shows an enlarged cross-sectional view showing the rupture of the first vent portion 161a, and FIG. 4B shows an enlarged cross-sectional view showing the rupture of the second vent portion 162a. Hereinafter, structures and operations of the first vent portion 161a and the second vent portion 162a of the cap plate 160 will be described with reference to FIGS. 4A and 4B.

The first vent portion 161a may have a substantially circular, quadrangular, or polygonal planar shape. The diameter of the first vent portion 161a may be in a range from approximately 2 mm to approximately 5 mm. When the diameter of the first vent portion 161a is less than 2 mm, it may not be easy to discharge gas due to a reduction in the rupture area. In addition, by setting the diameter of the first vent portion 161a to 5 mm or less, penetration of oxygen and moisture into the case 110 can be minimized even when the first vent portion 161a is opened. The first vent portion 161a may be shaped of a groove that is concavely formed upward from the lower surface of the cap plate 160 (e.g., the central region 161 of the cap plate 160 is thinner in the region of the first vent portion 161a).

The first vent portion 161a may be located at the center of the cap plate 160 and may have a uniform (or substantially uniform) thickness. The cap plate 160 at the first vent portion 161a may have a thickness in a range of approximately 0.08 mm to approximately 0.14 mm. When the thickness of the cap plate 160 at the first vent portion 161a is less than 0.08 mm, the first vent portion 161a may be deformed or cracked due to external force or impact. In addition, when the thickness of the cap plate 160 at the first vent portion 161a is greater than 0.14 m, the first vent portion 161a may not be easily exposed to heat due to pre-venting. The cap plate 160 at the first vent portion 161a may be in a range from approximately 1/10 to approximately 1/7 the thickness of other regions of the cap plate 160. The first vent portion 161a may be shaped of a flat thin film having a smaller thickness than other regions of the cap plate 160.

When the internal pressure of the case 110 increases, the first vent portion 161a may be ruptured due to the thickness of the thin film. The first vent portion 161a is ruptured before the electrode assembly 120 is ignited, thereby facilitating heat absorption and cooling, and preventing expansion of the case 110 or deformation of the cap plate 160. When an ignition situation occurs in which the second vent portion 162a is ruptured, the first vent portion 161a may serve as a flow path to partially relieve an initial rapid increase in the internal pressure, and may reduce the risk of rupture of the cap plate 160 and the case 110.

The second vent portion 162a is provided at the edge region 162 and may be opened by a second rupture pressure. The second rupture pressure may be larger than the first rupture pressure at which the first vent portion 161a is opened (ruptured). The second rupture pressure may be in a range from approximately 25 to approximately 50 kgf/cm². Even when the second rupture pressure is set to a high pressure, the first vent portion 161a is provided to provide a heat exposure passage, and therefore the risk of rupture of the case 110 and the cap plate 160 may be reduced.

The second vent portion 162a may be a notch formed extending downward from the upper surface of the cap plate 160. In addition, the second vent portion 162a may be formed to have a ring shape in a plan view (e.g., a plane of the cap plate 160). The second vent portion 162a may be formed by pressing and forging the upper surface of the cap plate 160. The second vent portion 162a may have a symmetrical shape around the central region 161 (e.g., the second vent portion 162a may be concentric with the central region 161). When ignition occurs in the electrode assembly 120, the second vent portion 162a is ruptured to discharge gas and heat generated during combustion, thereby reducing the risk of rupture of the case 110. The second vent portion 162a may be spaced radially inward apart from the end portion 162b of the edge region 162. The thickness of the cap plate 160 at the second vent portion 162a is larger than the thickness of the cap plate 160 at the first vent portion 161a. The cap plate 160 at the second vent portion 162a may have a thickness in a range of approximately 0.15 mm to approximately 0.2 mm. The thickness of the cap plate 160 at the second vent portion 162a may correspond to a thickness ranging from the lowest point of the notch to the lower surface of the cap plate 160. When the second vent portion 162a provided at the edge region 162 of the cap plate 160 is ruptured, gas and hot air may be more easily discharged due to an increased rupture area, thereby preventing thermal runaway and rupture.

In the cylindrical secondary battery 100, when the temperature of the cell increases due to the occurrence of an event, the first vent portion 161a and the second vent portion 162a are sequentially opened at the first rupture pressure and the second rupture pressure, respectively, so that the internal pressure can be dispersed by heat exposure through the first vent portion 161a, thereby preventing rupture of the case 110. In addition, when ignition occurs, the second vent portion 162a is ruptured, so that the heat source of ignition can be easily discharged, thereby preventing deformation, rupture, or thermal runaway. That is, the cylindrical secondary battery 100 includes two vents ruptured by different rupture pressures, and thus, may be sequentially opened at different rupture pressures, thereby improving safety.

Additionally, referring to FIG. 5, an enlarged cross-sectional view illustrating another example cap plate of the cylindrical secondary battery shown in FIG. 2 is shown. The cap plate 260 includes a first vent portion 261a and a second vent portion 162a. The cap plate 260 may have a similar structure and shape to the cap plate 160 shown in FIGS. 3, 4A and 4B. However, the cap plate 260 is a substantially flat plate and may not have a separate step. That is, the cap plate 260 may not include a separate connection region 163, and a central region 261 and an edge region 162 may be positioned on the same plane.

The cap plate 260 may have the same operation and structure as the cap plate 160 shown in FIGS. 3, 4A, and 4B in terms of the second vent portion 162a, and thus, hereinafter, the shape and operation of the first vent portion 261a will be described in detail.

The cap plate 260 has a first vent portion 261a configured to open (rupture) at a first rupture pressure at the center thereof. The first rupture pressure may be a pressure at which the first vent portion 261a is ruptured when the internal pressure of the case 110 reaches a set pressure. In addition, the first rupture pressure may be in a range from approximately 7 to approximately 10 kgf/cm². The first vent portion 261a may have a substantially circular, quadrangular, or polygonal planar shape. The diameter of the first vent portion 261a may be approximately 2 mm to approximately 5 mm. When the diameter of the first vent portion 261a is less than 2 mm, it may not be easy to discharge gas due to a reduction in the rupture area. In addition, by setting the diameter of the first vent portion 261a to 5 mm or less, penetration of oxygen and moisture into the case 110 can be minimized even when the first vent portion 261a is opened. The first vent portion 261a may be shaped of a thin film cap that is concave downward in the cap plate 260. That is, the first vent portion 261a may be a thin film having a downwardly arcuate shape in cross section.

The first vent portion 261a may be located at the center of the cap plate 260 and may have a uniform (or substantially uniform) thickness. The cap plate 260 at the first vent portion 261a may have a thickness in a range of approximately 0.08 mm to approximately 0.14 mm. When the thickness of the cap plate 260 at the first vent portion 261a is less than 0.8 mm, the first vent portion 261a may be deformed or cracked due to external force or impact. In addition, when the thickness of the first vent portion 261a is greater than 0.14 m, the first vent portion 261a may not be easily exposed to heat due to pre-venting. The cap plate 260 at the first vent portion 261a may be approximately 1/10 to approximately 1/7 the thickness of other areas of the cap plate 260.

When the internal pressure of the case 110 increases, the first vent portion 261a may be ruptured while being inverted to be convex upward. The first vent portion 261a is ruptured before the electrode assembly 120 is subjected to thermal runaway, and thus, heat absorption and cooling may be facilitated, and expansion of the case 110 or deformation of the cap plate 260 may be prevented. When an internal ignition occurs in which the second vent portion 162a is ruptured, the first vent portion 261a may serve as a flow path to partially relieve an initial rapid increase in the internal pressure, and may reduce the risk of rupture of the cap plate 260 and the case 110.

As described above, in the cylindrical secondary battery according to an embodiment of the present disclosure, when the temperature of a cell increases due to the occurrence of an event, a first vent portion and a second vent portion may be sequentially opened at a first rupture pressure and a second rupture pressure, respectively, and the internal pressure may be dispersed by heat exposure through the first vent portion, thereby preventing the occurrence of rupture. In addition, when ignition occurs, the second vent portion is ruptured so that the heat source of ignition is easily discharged to prevent deformation, rupture, and/or thermal runaway.

That is, an embodiment of the present disclosure provides a cylindrical secondary battery which can be sequentially opened at different rupture pressures, by including two vents ruptured by the different rupture pressures, thereby improving safety.

While the foregoing embodiment is only one embodiment for carrying out the cylindrical secondary battery according to the present disclosure, which is not limited to the embodiment, it will be understood by a person skilled in the art that various changes in form and details may be made therein without departing from the scope of the present disclosure as defined by the following claims.

## Claims

**1.** A cylindrical secondary battery comprising:
an electrode assembly comprising a first electrode plate, a separator, and a second electrode plate;
a case accommodating the electrode assembly, the case comprising an opening at an upper end and being electrically connected to the second electrode plate;
a terminal penetrating a lower surface of the case and being electrically connected to the first electrode plate; and
a cap plate sealing an upper end of the case,
wherein the cap plate comprises: a first vent portion at the center of a central region, the first vent portion having a smaller thickness than other regions of the cap plate; and a second vent portion at an edge region outside the central region and, the second vent portion having a smaller thickness than the other regions of the cap plate and a larger thickness than the first vent portion.

**2.** The cylindrical secondary battery as claimed in claim 1, wherein the thickness of the cap plate at the first vent portion is approximately 1/10 to approximately 1/7 the thickness of the cap plate outside the first vent portion.

**3.** The cylindrical secondary battery as claimed in claim 1 or claim 2,
wherein the cap plate at the first vent portion has a uniform thickness and is in a range from approximately 0.08 mm to approximately 0.14 mm.

**4.** The cylindrical secondary battery as claimed in any one of claims 1 to 3, wherein the diameter of the first vent portion is in a range from approximately 2 mm to approximately 5 mm.

**5.** The cylindrical secondary battery as claimed in any one of claims 1 to 4, wherein the first vent portion is a flat thin plate.

**6.** The cylindrical secondary battery as claimed in any one of claims 1 to 4, wherein the first vent portion is a cap that is concave downward.

**7.** The cylindrical secondary battery as claimed in any one of claims 1 to 6, wherein:
(i) the first vent portion has a circular, quadrangular or polygonal shape on a plane of the cap plate; and/or
(ii) the second vent portion is shaped of a planar ring that is symmetric with respect to the central region.

**8.** The cylindrical secondary battery as claimed in any one of claims 1 to 5, wherein the cap plate comprises a step between the central region and the edge region, optionally wherein the cylindrical secondary battery further comprises an inclined connection region connecting the central region to the edge region.

**9.** The cylindrical secondary battery as claimed in any one of claims 1 to 8, wherein the cap plate at the second vent portion has a thickness in a range from approximately 0.15 mm to approximately 0.2 mm.

**10.** The cylindrical secondary battery as claimed in any one of claims 1 to 9, wherein:
(i) the case comprises a beading part recessed into the case and a crimping part above the beading part, wherein the cap plate is fixed between the beading part and the crimping part, and wherein the crimping part comprises an upper end of the case bent inward toward the cap plate; and/or
(ii) the cylindrical secondary battery further comprises a gasket between the cap plate and the beading part and between the cap plate and the crimping part, and wherein the cap plate is non-polar.

**12.** The cylindrical secondary battery as claimed in any one of claims 1 to 11, wherein a first rupture pressure of the first vent portion is smaller than a second rupture pressure of the second vent portion, optionally wherein the first rupture pressure is in a range from approximately 7 to approximately 10 kgf/cm², and wherein the second rupture pressure is in a range from approximately 25 to approximately 50 kgf/cm².

**13.** A cylindrical secondary battery comprising:
an electrode assembly having a first electrode plate, a separator, and a second electrode plate;
a case accommodating the electrode assembly, the case comprising an opening at an upper end and being electrically connected to the second electrode plate;
a terminal penetrating a lower surface of the case and being electrically connected to the first electrode plate; and
a cap plate sealing an upper end of the case,
wherein the cap plate comprises a first vent portion and a second vent portion which are configured to rupture at different rupture pressures, and wherein the first vent portion is a thin film having a substantially uniform thickness.

**14.** The cylindrical secondary battery as claimed in claim 13, wherein:
(i) the first vent portion is a plate of a flat thin film; or
(ii) the first vent portion is a cap that is concave downward.

**15.** The cylindrical secondary battery as claimed in claim 13 or claim 14,
wherein the first vent portion is located in a central region of the cap plate, and wherein the second vent portion is shaped of a ring and is located in an edge region of the cap plate outside the first vent portion on a plane of the cap plate.
